# EUROPEAN PATENT APPLICATION

(11) **EP 4 383 148 A1**
(43) Date of publication of application: **12.06.2024**
(21) Application number: 21952847.8
(22) Date of filing: 06.08.2021
(51) Int. Cl.: G06N 20/00

(54) **EVALUATION PROGRAM, EVALUATION METHOD, AND ACCURACY EVALUATION DEVICE**

(71) Applicant: FUJITSU LIMITED, Kawasaki-shi, Kanagawa 211-8588 (JP)
(72) Inventor: KINGETSU, Hiroaki, Kawasaki-shi, Kanagawa 211-8588 (JP)
(74) Representative: Hoffmann Eitle
(86) International application number: PCT/JP2021/029283
(87) International publication number: WO 2023/013024

(57) **Abstract**

The computer is caused to execute processing including: generating a second machine learning model, by updating a parameter of a first machine learning model, based on a first feature amount that is obtained from first information using the parameter of the first machine learning model; generating a third machine learning model, based on a first training data and a second training data, the first training data including: a second feature amount that is obtained from a second data based on a parameter of the second machine learning model; and a correct label indicating first information, the second training data including: a third feature amount that is obtained from a third data based on the parameter of the second machine learning model; and a correct label indicating second information; evaluating the second machine learning model, based on the prediction accuracy of the generated third machine learning model.

## Description

### FIELD

The present embodiments relate to an evaluation program, an evaluation method, and an accuracy evaluation device.

### BACKGROUND

Business operation using machine learning is performed in the following procedure. First, in the training phase, machine learning is repeated using prepared training data, to generate a machine learning model to be used in business. The training data may be also referred to as instructor data. In the application phase, the generated machine learning model receives an input of the operation data used in the business, and outputs the prediction result. Here, while the machine learning model is continuously used in business, the external environment changes with the passage of time, and the tendency of the operation data input to the machine learning model may be drifted from the training data used for training the machine learning model.

As a result of the drift in the operation data, the estimation accuracy of the machine learning model is degraded due to a difference between the training data and the operation data at the time of development of the machine learning model, a change in the statistical tendency of the input operation data at the time of operation, and the like. Therefore, a technique for coping with such deterioration in estimation accuracy of the machine learning model has been developed.

As one of techniques for coping with the deterioration of the estimation accuracy, a technique for attempting automatic accuracy restoration of a machine learning model in accordance with operation date input during operation has been proposed. In this technique, automatic accuracy restoration is attempted in the following procedure. For example, operation data input during operation is represented in a data space. The operation data represented in the data space are separated by a machine learning model at boundary lines called decision boundaries. Next, the operation data represented in the data space is projected to a feature amount space which is a mathematical space in which a feature of data distribution is represented as a data group, and thus the data group formed by the operation data is grasped as a shape, and the drift is addressed. Thereafter, labeling is performed by using the classified result of the operation data projected on the feature amount space as a pseudo label for the operation data expressed in the data space. By retraining with the labeled operational data, the machine learning model automatically regains accuracy. This makes it possible to prevent the accuracy of the machine learning model and, in turn, the accuracy of the AI (artificial intelligence) system from deteriorating. The pseudo label is, for example, a correct label assigned by estimation to data to which labeling is not applied.

However, whether or not the automatic accuracy restoration is successful depends on the data distribution, and when the change in the operation data is large, it may be difficult to restore the accuracy deterioration even if the automatic accuracy restoration is performed. Even when the input monitoring is performed, the accuracy degradation of the machine learning model may be caused by abnormal values in the input operational data other than those to be monitored. Therefore, to ensure the quality of AI systems, it is important to monitor the output results of the machine learning model to detect an abnormality, predict accuracy degradation, or detect an abnormality in advance.

For example, a case will be described in which a model having a feature amount extraction layer such as a convolution neural network and a fully connected layer that constructs a decision boundary is used as a configuration of a machine learning model that performs deep learning. In addition, as unsupervised adaptation, adversarial training in which a gradient reversal layer for reversing the sign of a gradient is introduced in backward learning and learning is performed using binary cross entropy (BCE) loss from feature amount extraction of input data will be described as an example. In this case, automatic accuracy restoration is performed using a pseudo label using density clustering. Then, the feature amount extraction layer and the fully connected layer are retrained by the model in which the metric layer is additionally introduced after the fully connected layer. Here, the layers from the output of the feature amount extraction layer to the metric layer are fixed. The Metric layer is a layer for performing distance learning, and creates a feature amount space.

In such a case, as one of methods for evaluating the degree of accuracy recovery, there is a method for evaluating the degree of accuracy recovery of the machine learning model by newly obtaining a correct label, in order to check whether the output prediction label is correct. In addition, there is a method of evaluating the degree of accuracy recovery based on a difference between the prediction when data is input to the machine learning model before the automatic accuracy restoration and the prediction when the same data is input to the machine learning model after the automatic accuracy restoration.

Further, as a conventional technique relating to the accuracy of a machine learning model, there is a technique of acquiring the number of cases of input data, acquiring the number of corrections from correction information of a classified result, and calculating a qualitative ratio. As a technique of a binary classifier that provides an accuracy index, there is a technique of calculating a score indicating whether an unlabeled sample is positive example data or not, calculating an evaluation value model and a probability model based on the score and the sample, and learning a score function of binary classification. Further, there is a technique for dividing an input screen image into left and right images, extracting first candidates of left and right eyes using a morpheme operator, extracting second candidates of left and right eyes using a binary classifier for data of the first candidates, and specifying positions of the left and right eyes.

### SUMMARY

### TECHNICAL PROBLEM

However, in the technique of evaluating the accuracy of the machine learning model by obtaining the correct label, it is not realistic and difficult to execute the accuracy evaluation when the cost of obtaining the correct label is high. In addition, in the technique of evaluating the accuracy from the prediction difference between the outputs from the machine learning models before and after the accuracy automatic recovery, when both models have deteriorated in accuracy in the same manner, the prediction difference becomes small, and it is difficult to perform appropriate evaluation.

In addition, in the technique of calculating the qualitative ratio from the number of input data and the number of corrections, it is concerned with how much a new data can be classified by the current machine learning model, and it is difficult to evaluate the accuracy of the machine learning model itself. In addition, the technique of calculating an evaluation value model and a probability model based on a score indicating whether an unlabeled sample is a positive example and the sample is a method of applying the binary classification learning for unlabeled data in logistic regression, and it is difficult to evaluate the accuracy of the machine learning model. In addition, in the technique of extracting the second candidates using the binary classifier for the first candidates extracted using the morpheme operator and specifying the positions of the left and right eyes, the accuracy of machine learning can be improved by using the binary classifier in the final stage, but it is difficult to evaluate the accuracy of the classification model. Therefore, even if any of the techniques is used, it is difficult to accurately determine the accuracy deterioration of the machine learning model, and it is difficult to suppress the decrease in the estimation accuracy due to the accuracy deterioration of the machine learning model from the delay in the response.

The disclosed technology has been made in view of the above, and an object of the disclosed technology is to provide an evaluation program, an evaluation method, and an accuracy evaluation device that maintain the estimation accuracy of a machine learning model.

### SOLUTION TO PROBLEM

In one aspect of the evaluation program, the evaluation method, and the learning model evaluation device disclosed in the present application, the following processing is executed by a computer. One is a process of generating a second machine learning model, by updating a parameter of a first machine learning model, based on a first feature amount that is obtained from first information using the parameter of the first machine learning model. One is a process of generating a third machine learning model based on first training data and second training data, the first training data including: a second feature amount that is obtained from second data based on a parameter of the second machine learning model; and a correct label indicating first information, the second training data including: a third feature amount that is obtained from third data based on a parameter of the second machine learning model; and a correct label indicating second information. One is a process of evaluating the second machine learning model based on the prediction accuracy of the generated third machine learning model.

### ADVANTAGEOUS EFFECTS OF INVENTION

In one aspect of the present embodiments, it is possible to maintain the estimation accuracy of the machine learning model.

### BRIEF DESCRIPTION OF DRAWINGS

FIG. 1 is a block diagram of an accuracy evaluation device according to an embodiment;
FIG. 2 is a diagram illustrating the overall flow of automatic accuracy restoration and estimation accuracy evaluation in the embodiment.
FIG. 3 is a diagram illustrating an overview of estimation accuracy evaluation of a model by an accuracy evaluation device;
FIG. 4 is a diagram for explaining an example of a feature amount extractor;
FIG. 5 is a flowchart of an estimation accuracy evaluation process performed by the accuracy evaluation device according to the embodiment;
FIG. 6 is a diagram illustrating a change in accuracy of model fitting with respect to concept drift.
FIG. 7 is a hardware configuration diagram of the accuracy evaluation device.

### DESCRIPTION OF EMBODIMENTS

Hereinafter, embodiments of an evaluation program, an evaluation method, and an accuracy evaluation device disclosed in the present application will be described in detail with reference to the drawings. The evaluation program, the evaluation method, and the accuracy evaluation device disclosed in the present application are not limited to the following embodiments.

### [Example]

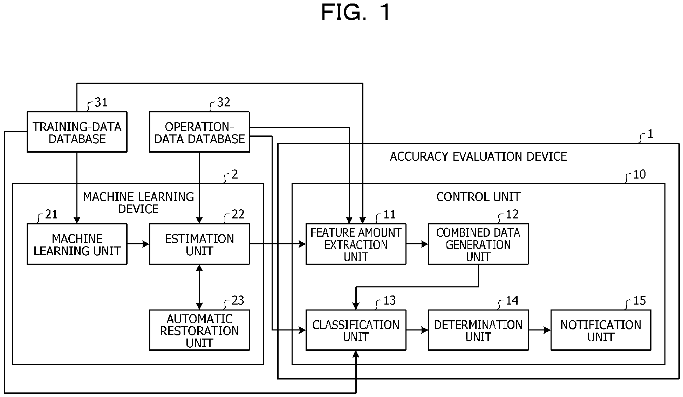

FIG. 1 is a block diagram of an accuracy evaluation device according to an embodiment. The accuracy evaluation device 1 according to the present embodiment is coupled to a machine learning device 2. Both the accuracy evaluation device 1 and the machine learning device 2 are coupled to a training-data database 31 and an operation-data database 32.

The training-data database 31 stores training-data for training the machine learning model. The training data is teaching data that includes input data and a correct outcome. In the following description, the machine learning model is simply referred to as a model.

The operation data database 32 stores operation data to be inferred by using a trained model. Here, in the present embodiment, a state in which the operation data is already stored in the operation data database 32 will be described as an example, but a configuration may be adopted in which the operation data is stored in the operation data database 32 from an device that generates the operation data as needed during the operation of the machine learning device 2.

The machine learning device 2 trains the model using the training data, and then applies the trained model to perform estimation on the operational data. The machine learning device 2 includes a machine learning unit 21, an estimation unit 22, and an automatic restoration unit 23.

The machine learning unit 21 holds a model that is a base before training. The machine learning unit 21 acquires the training data from the training data database 31. Next, the machine learning unit 21 inputs the input data included in the training data to the held model and obtains an output from the model. The machine learning unit 21 then trains the model by adjusting the parameters of the model so that the difference between the output from the model and the correct output result is reduced. The machine learning unit 21 outputs the trained model to the estimation unit 22. The model trained by the machine learning unit 21 corresponds to an example of a "first machine learning model".

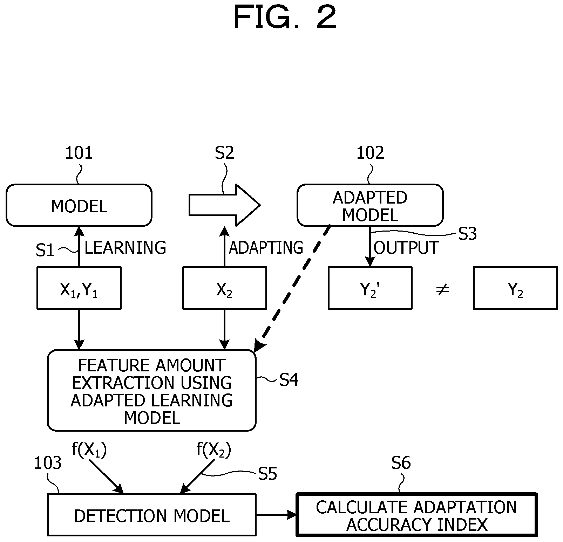

FIG. 2 is a diagram illustrating an overall flow of automatic accuracy restoration and estimation accuracy evaluation in the embodiment. The machine learning unit 21 performs training on the model 101 as illustrated in step S1 in FIG. 2. The data X₁ and Y₁ in FIG. 2 are training data.

Returning to FIG. 1, the description will be continued. The estimation unit 22 receives an input of the trained model from the machine learning unit 21. The estimation unit 22 acquires the operation data from the operation data database 32. Then, the estimation unit 22 inputs the operation data to the trained model and obtains an output from the model as an estimation result. Thereafter, the estimation unit 22 notifies the user of the estimation result by, for example, transmitting the estimation result to a user terminal (not illustrated) or the like. The estimation unit 22 repeats the estimation of the operation data. The operation data input to the model before the tracking corresponds to an example of "first data".

The estimation unit 22 outputs the estimation result to the automatic restoration unit 23. Thereafter, when the model updated by the accuracy automatic restoration is input to the estimation unit 22 from the automatic restoration unit 23, the estimation unit 22 performs estimation using the updated model. That is, the estimation unit 22 estimates the operation data using the sequentially updated model.

As described above, the external environment may change over time as the machine learning model continues to be used in business, and the tendency of the operation data input to the machine learning model may change from the training data used for training the machine learning model. Examples of data that can change include e-mail spam, which changes in content; electricity demand and stock prices, which change year by year; poker hands, which change depending on the situation; fixed-point images, which has seasonal changes between summer and winter and time zone changes between morning and night. A phenomenon in which the statistical characteristics of the objective variable to be predicted by the machine learning model change in an unexpected manner with the passage of time may be called "concept drift". Recovering the model's estimation accuracy by adapting the model to changes due to the concept drift may be referred to as an "adaptation" to the drift in data. Further, a modification of the model after the concept drift has occurred so as to make inferences appropriately may be referred to as "model adaptation." That is, it can be said that, when a concept drift occurs, an adaptation to the drift in data is realized by adapting the model to the drift in the data so that the estimation accuracy of the model is recovered.

In the concept drift, when the joint probability of two random variables is considered in the time t0 and the time t1, p representing the joint distribution, which represents the probability of all possible combinations, does not match. This is considered to be caused by several reasons. The first is a case where there is no change in the distribution of the training data, but the correct labels change; in this case, the concept drift may be called a virtual drift. The second is a case where the conditional probability has changed. The third is a case where the decision boundary has changed.

A technique capable of adapting a model to changes in operation data when it is assumed that a true decision boundary of concept drift does not change or hardly changes is called a domain adaptation technique. For example, the above assumption is satisfied when the operation data is image data. In the case of image data, even if the image of the cat is rotated and the color is changed, the object that appears as the cat is the same, and thus it can be said that the decision boundary does not change. Thus, such domain adaptation is substantially a technique in the field of image processing, and the virtual drift can be considered as a target.

On the other hand, the automatic accuracy restoration technique of projecting a data group onto a feature amount space and performing an adaptation is an adaptive technique for general concept drift. In this technique, various data such as image data and table data can be handled as estimation targets. However, in this technique, when image data is an estimation target, the virtual drift is substantially an object to be adapted. The following description is related to an automatic accuracy restoration which is processing to perform an adaptation in a situation where a data group is projected onto a feature amount space. It is noted that various data such as table data may be handled in addition to image data.

As illustrated in step S3 in FIG. 2, the estimation unit 22 performs the estimation process using the adapted model 102 obtained by performing the automatic accuracy restoration on the model 101, wherein the adapted model 102 is a model that has been adapted to the drift in the operation data. The data Y₂' is an estimation result of the data X₂ by the estimation unit 22. The data Y₂ is a correct label for the data X₂. As the estimation accuracy of the adapted model 102 decreases, the data Y₂ and the data Y₂' no longer match.

The automatic restoration unit 23 acquires the training data and the trained model from the machine learning unit 21 when the training of the model is completed. Next, the automatic restoration unit 23 projects each training data arranged in the data space to a feature amount space which is a mathematical space indicating a feature amount of the training data. Specifically, using a function for extracting the feature amount of the training data included in each class in the data space, the automatic restoration unit 23 projects each training data to the feature amount space and converts the training data into a vector. As a result, training data in the same class is represented as a vector at a collective position in the feature amount space because the feature amounts are close to each other. Thus, the automatic restoration unit 23 can collectively express the training data, which was represented in the high-dimensional data space, in a coherent manner in the low-dimensional feature amount space.

In the projection onto the feature amount space, when the machine learning model is a neural network, a value calculated up to the final layer of the trained neural network or a specific layer before the final layer is used as a feature amount. That is, projection is performed by inputting data to the neural network and causing the neural network to perform calculation by forward propagation to acquire a feature amount of the data, thereby performing projection. The space in which the vectors representing the acquired feature amounts are arranged is the feature amount space. That is, it can be said that the automatic restoration unit 23 projects data to the feature amount space based on the parameters of the trained model.

Next, the automatic restoration unit 23 performs density-based clustering on the training data represented on the feature amount space to determine a data group (cluster) on the feature amount space. Next, the automatic restoration unit 23 specifies, on the feature amount space, a data group corresponding to each class in the data space. Then, the automatic restoration unit 23 sets the correct label of each class in the data space as the correct label of the corresponding data group in the feature amount space. That is, at this stage, the automatic restoration unit 23 only confirms the correspondence between the data group corresponding to each cluster of the training data projected onto the feature amount space and the class indicated by the correct label.

Thereafter, when the operation stage of the model is entered, the automatic restoration unit 23 acquires the operation data used for the estimation from the estimation unit 22. Then, the automatic restoration unit 23 projects the acquired operation data from the data space to the feature amount space. The projection onto the feature amount space is performed based on the feature amount of the training data extracted using the model, and the feature extracted for the projection onto the feature amount space corresponds to an example of a "first feature amount". Then, the automatic restoration unit 23 performs clustering of the operation data in the feature amount space, specifies a class corresponding to the generated cluster, and determines a pseudo label. Next, the automatic restoration unit 23 generates training data for retraining by labeling the clustering result as a pseudo label to the operation data, and executes retraining of the machine learning model. Thus, the automatic restoration unit 23 creates a new machine learning model having the updated decision boundary in data space. The operation data labeled with the result of the clustering as the pseudo label corresponds to an example of "third training data". Then, the automatic restoration unit 23 outputs the model updated by the retraining to the estimation unit 22. In this way, by performing automatic accuracy restoration on the model, the automatic restoration unit 23 adapts the model to the drift in the operation data to secure the inference accuracy. The model adapted to the drift in the operation data corresponds to an example of a "second machine learning model".

The data X₂ in FIG. 2 is operation data. The automatic restoration unit 23 generate the adapted model 102 by performing an adaptation to the drift, as step S2 illustrated in Fig.2, to adapt the model 101 to the drift in the operation data.

The accuracy evaluation device 1 obtains an adaptation accuracy index to be an index for evaluating the estimation accuracy from the adapted model, which is a model to which the accuracy automatic restoration has been performed and that is used for estimation by the estimation unit 22, and evaluates the estimation accuracy of the adapted model using the obtained adaptation accuracy index. Then, when the estimation accuracy of the adapted model is degraded, the accuracy evaluation device 1 notifies the user of the degradation of the estimation accuracy. The accuracy evaluation device 1 will be described in detail below. The accuracy evaluation device 1 includes a control unit 10. As illustrated in FIG. 1, the control unit 10 includes a feature amount extraction unit 11, a combined data generation unit 12, a classification unit 13, a determination unit 14, and a notification unit 15.

The feature extraction unit 11 extracts feature amounts for accuracy evaluation from the training data and the operation data, as illustrated in step S4 in FIG. 2. The operation of the feature amount extraction unit 11 will be described in detail below.

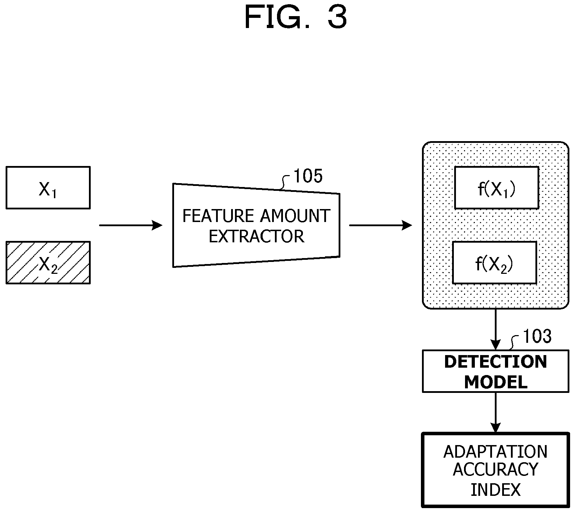

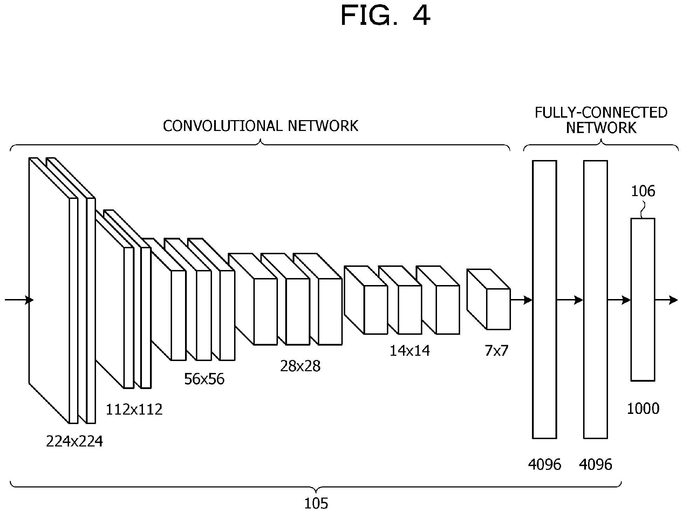

FIG. 3 is a diagram illustrating an overview of estimation accuracy evaluation of a model by the accuracy evaluation device. FIG. 4 is a diagram for explaining an example of the feature amount extractor.

The feature amount extraction unit 11 includes the feature amount extractor 105 in FIG. 3. For example, a case where the model used by the estimation unit 22 is the CNN illustrated in FIG. 4 will be described. In this case, the feature amount extractor 105 outputs as a feature amount, an output of one previous layer from the final layer 106 in the CNN. That is, the feature amount extractor 105 includes each layer in both the convolutional network and the fully connected network except for the final layer 106 to the convolutional network. For example, in the case of Visual Geometry Group (VGG) 16, the feature amount extractor 105 includes layers up to a layer immediately before the final layer 106 of 1000-class classification. That is, in the case of VGG16, the feature amount output from the feature amount extractor 105 is a first-order tensor (vector) of 4096.

The feature amount extraction unit 11 acquires from the estimation unit 22, the adapted model, which is a model to which the accuracy automatic restoration has been performed and that is used for estimation by the estimation unit 22 of the machine learning device 2. The feature amount extraction unit 11 acquires the training data from the training data database 31 and acquires the operation data from the operation data database 32. Next, the feature amount extraction unit 11 inputs the acquired training data to the feature amount extractor 105, thereby obtaining the feature amount of the training data as an output. The feature amount extraction unit 11 inputs the acquired operation data to the feature amount extractor 105 to obtain the feature amount of the operation data as an output. Thereafter, the feature amount extraction unit 11 outputs the feature amount of the training data and the feature amount of the operation data to the combined data generation unit 12.

In the present embodiment, the training data corresponds to an example of "second data", and the feature amount of the training data corresponds to an example of "second feature amount". Further, the information indicating that the data is training data corresponds to an example of "first information", and a set of data including the feature amount of the training data and the information indicating that the data is training data corresponds to an example of "first training data". The operation data corresponds to an example of "third data", and the feature amount of the operation data corresponds to an example of "third feature amount". In addition, the information indicating that the data is the operation data corresponds to an example of "second information", and a set of data including the feature amount of the operation data and the information indicating that the data is the operation data corresponds to an example of "second training data".

For example, as illustrated in FIG. 3, the feature amount extraction unit 11 inputs the training data X₁ to the feature amount extractor 105, and obtains the feature amount f (X₁) as its output. The feature amount extraction unit 11 inputs the operation data X₂ to the feature amount extractor 105, and thereby obtaining the feature amount f (Xz) as a corresponding output.

Here, when the model is appropriately adapted to the drift in the operation data, the feature amount f (X₁) and the feature amount f (Xz) are considered to be similar to each other, and the internal space in the model is considered to be trained as a space in which the feature amount f (X₁) and the feature amount f (X₂) are difficult to be identified. Therefore, as illustrated in FIG. 3, based on the degree of the detection accuracy with respect to the detection result obtained by inputting the feature amount f (X₁) and the feature amount f (Xz) to the detection model 103 configured to detect whether the data that is the source of each feature amount is the training data or the operation data, it is possible to determine whether the adaptation to the drift in the operation data is successful. That is, when the feature amount f (X₁) and the feature amount f (X₂) are appropriately classified by the detection model 103 and the original data is detected, the internal space of the model is a space in which the feature amount f (X₁) and the feature amount f (X₂) are difficult to be identified, and it can be said that the adaptation to the drift in the operation data is not appropriately performed. Therefore, as described below, the accuracy evaluation device 1 according to the present embodiment obtains from the output when the feature amount f (X₁) and the feature amount f (X₂) are input to the detection model 103, an adaption accuracy index indicating the degree of adapting of the model, and determines whether the adapting of the model is successful.

The combined data generation unit 12 acquires the feature amount of the training data from the feature amount quantity extraction unit 11. The combined data generation unit 12 acquires the feature amount of the operation data from the feature amount extraction unit 11. Then, the combined data generation unit 12 mixes the feature amount of the training data and the feature amount of the operation data, to generate combined data in which the feature amounts of the plurality of pieces of training data and the feature amounts of the plurality of pieces of operation data are included in a state in which it is difficult to distinguish between the training data and the operation data from the information other than the respective features. Then, the combined data generation unit 12 outputs the combined data to the classification unit 13.

The classification unit 13 inputs the feature amount of the training data and the feature amount of the operation data to the detection model 103 and acquires the results outputted from the detection model 103, as indicated by step S5 in FIG. 2. The operation of the classification unit 13 will be described in detail below.

The classification unit 13 includes a detection model 103 which is a binary classifier for classifying the feature amount of the training data and the feature amount of the operation data into two. For example, the classification unit 13 acquires the training data from the training data database 31. The classification unit 13 acquires the operation data from the operation data database 32. The classification unit 13 performs training on the detection model 103 so as to classify the respective data into the training data and the classified data using the acquired training data and classified data. Thus, the classification unit 13 can acquire the detection model 103 configured to classify the input feature amount into the training data and the operation data. Here, the data used for training of the detection model 103 may be the training data and the operation data which are the sources of the feature amounts included in the combined data, or may be training data and operation data different from the training data and the operation data.

Thereafter, the classification unit 13 receives an input of the combined data from the combined data generation unit 12. Then, the classification unit 13 classifies the data into the training data and the operation data by inputting each data included in the combined data to the detection model 103, and estimates whether each data is the feature amount of the training data or the operation data. Thereafter, the classification unit 13 outputs the classification result to the determination unit 14.

The determination unit 14 calculates an adaption accuracy index indicating the degree of adaptation of the model to the concept drift illustrated in step S6 in FIG. 2, that is, the degree of adaptation to the drift in the operation data. Then, the determination unit 14 uses the calculated adaptation accuracy index to perform processing. Hereinafter, the details of the operation of the determination unit are described.

The determination unit 14 receives, from the classification unit 13, an input of a classification result of the training data and the operation data by using the detection model 103. Then, the determination unit 14 calculates a adaption accuracy index indicating the degree of adaptation to the drift in the operation data by using the classification result between the training data and the operation data by the detection model 103.

For example, the determination unit 14 obtains, as the adaption accuracy index, a score of the receiver operating characteristic (ROC) / area under the curve (AUC) with respect to the prediction accuracy by the detection model 103. The ROC/AUC score is a value effective as an accuracy index when data is unbalanced, that is, when one class is excessive as data and the other class is insufficient in the case of a binary classification. The ROC curve is a curve in a space in which the horizontal axis represents the False Positive Rate and the vertical axis represents the Recall. The ROC can be obtained by calculating a value of the Recall when the False Positive Rate is changed. Further, the ACU corresponds to the area of the lower portion of the ROC curve, and it can be determined that the reliability is high when the area is large. The AUC has a maximum value of 1 and a minimum value of 0.5. The AUC of 0.5 is the same value as the result obtained when random prediction is performed. In general, when the ROC/AUC score is 0.7 to 0.8, the learning model can be regarded as reliable.

The determination unit 14 determines, using the calculated adaption accuracy index, whether the adaptation to the drift in the operation data is successful. For example, the determination unit 14 determines the classification accuracy of the detection model 103 by determining whether the ROC / AUC score is less than a predetermined accuracy threshold, and determines whether the adaptation to the drift in the operation data is successful from the classification accuracy. For example, when the ROC / AUC score is used as the adaption accuracy index, the accuracy threshold can be set to 0.7 or the like.

That is, when the ROC/AUC score is less than a predetermined accuracy threshold, the determination unit 14 determines that the classification accuracy of the detection model 103 is low and unreliable. Then, the fact that the classification performed by the detection model 103 is not appropriate means that the internal space in the model has been trained as a space in which the feature amount of the training data and the feature amount of the operation data are difficult to be identified, and thus the determination unit 14 determines that the adaptation to the change in the operation data has succeeded.

In contrast, when the ROC/AUC score is equal to or greater than the predetermined accuracy threshold, the determination unit 14 determines that the classification accuracy of the detection model 103 is high and reliable. Then, the fact that the detection model 103 has performed appropriate classification means that the internal space in the model has been trained as a space in which the feature amount of the training data and the feature amount of the operation data can be identified, and thus the determination unit 14 determines that the adaptation to the change in the operation data has failed.

When the determination unit 14 determines that the adaptation to the change in the operation data is successful, the determination unit 14 causes the machine learning device 2 to continue to control the estimation process and the automatic restoration process. On the other hand, when it is determined that the adaptation to the change in the operation data has failed, the determination unit 14 instructs the notification unit 15 to notify the adaptation failure.

In the present embodiment, the prediction accuracy of the detection model 103 is obtained based on whether the training data and the operation data can be classified as different classes, respectively, and the estimation accuracy of the model is evaluated based on the prediction accuracy. However, the class for evaluating the accuracy of the detection model 103 is not limited to this. For example, the training data and the operation data used until the previous automatic precision restoration may be set as the "second data", and the operation data used from the previous automatic precision restoration to this time may be set as the "third data". In this case, the feature amount of the second data corresponds to an example of the "second feature amount", and the feature amount of the third data corresponds to an example of the "third feature amount". Then, information indicating that the data is any of the training data and the operation data used until the previous automatic accuracy restoration is referred to as "first information", and a set of the second feature amount and the first information is referred to as "first training data".

In addition, information indicating that the data is the operation data that has been used from the previous automatic precision restoration to the current automatic precision restoration may be set as "second information", and a set of the third feature amount and the second information may be set as "second training data". In this case, the detection model 103 may be trained by using the first training data and the second training data, and thereby the prediction accuracy of the detection model 103 may be determined. In addition, the operation data used until the previous automatic precision restoration may be set as "second data", and the operation data used from the previous automatic precision restoration to this time may be set as "third data".

The notification unit 15 receives an instruction to notify of the adaptation failure from the determination unit 14. The notification unit 15 transmits a notification of the failure of the accuracy automatic restoration to terminals (not illustrated) used by the administrator and users of the machine learning device 2, and notifies the administrator and users of the machine learning device 2 that the accuracy automatic restoration of the model is not appropriately performed.

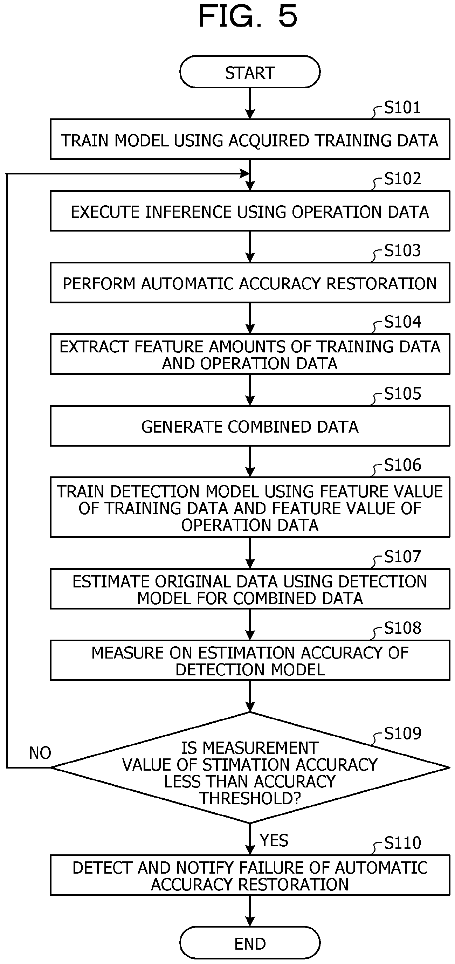

FIG. 5 is a flowchart of an estimation accuracy evaluation process performed by the accuracy evaluation device according to the embodiment. Next, a flow of estimation accuracy evaluation processing by the accuracy evaluation device 1 according to the embodiment will be described with reference to FIG. 5.

The machine learning unit 21 acquires the training data from the training data database 31. Then, the machine learning unit 21 trains the model using the acquired training data (step S101). Thereafter, the machine learning unit 21 outputs the trained model to the estimation unit 22.

The estimation unit 22 receives the model that is input from the machine learning unit 21. Next, the estimation unit 22 acquires the operation data from the operation data database 32. Then, the estimation unit 22 inputs the operation data to the model to obtain an output therefrom, and thereby executes inference using the operation data (step S102).

The automatic restoration unit 23 projects the arranged operation data onto the feature amount space, performs clustering on the feature amount space, assigns a pseudo label to each operation data, and retrains the model, thereby performing automatic accuracy restoration (step S103).

The feature amount extraction unit 11 generates the feature amount extractor 105 from the model used for estimation by the estimation unit 22. Next, the feature amount extraction unit 11 acquires training data from the training data database 31. The feature amount extraction unit 11 acquires the operation data from the operation data database 32. The feature amount extraction unit 11 inputs the training data and the operation data to the feature amount extractor 105, and extracts the feature amounts of the output training data and operation data (step S104). Then, the feature amount extraction unit 11 outputs the extracted feature amounts of the training data and the operation data to the combined data generation unit 12.

The combined data generation unit 12 receives the feature amount of the training data and the feature amount of the operation data that are input from the feature amount extraction unit 11. Then, the combined data generation unit 12 mixes the feature values of the training data and the feature amounts of the operation data, to generate combined data that is in a state in which it is difficult to distinguish between the training data and the operation data from the information other than the respective feature amounts (step S105). Thereafter, the combined data generation unit 12 outputs the generated combined data to the classification unit 13.

The classification unit 13 acquires the training data from the training data database 31. The classification unit 13 acquires the operation data from the operation data database 32. Then, the classification unit 13 trains the detection model 103, which is a binary classifier, using the feature amount of the training data and the feature amount of the operation data (step S106).

The classification unit 13 receives the combined data from the combined data generation unit 12. Then, the classification unit 13 inputs the combined data including the feature amount of the training data and the feature amount of the operation data to the trained detection model 103, and obtains an output from the detection model 103. The separation unit 13 thereby estimates whether the original data of the input feature amount is a training data or an operation data (step S107).

Then, the classification unit 13 obtains, from the estimation result, an adaptation accuracy index indicating the degree of adaptation of the detection model 103 from the estimation result, and performs measure on the estimation accuracy of the detection model 103 (step S108). Thereafter, the classification unit 13 outputs the measured estimation accuracy of the detection model 103 to the determination unit 14.

The determination unit 14 receives the estimation accuracy of the detection model 103 as an input from the classification unit 13. Then, for example, when the ROC / AUC score is used as the adaption accuracy index, the determination unit 14 determines whether the value of the adaption accuracy index, which is the measurement value of the estimation accuracy, is less than the accuracy threshold (step S109). If the adaption accuracy index is equal to or greater than the accuracy threshold (No at Step S109), the determination unit 14 determines that the adaption to the change in the operation data due to the concept drift has succeeded. In this case, the estimation accuracy evaluation process returns to step S102.

In contrast, if the adaption accuracy index is less than the accuracy threshold (Yes at Step S109), the determination unit 14 determines that the adaption to the change in the operation data due to the concept drift has failed, and detects the failure of the automatic accuracy restoration. Then, the determination unit 14 notifies the notification unit 15 of the detection result of the failure of the automatic accuracy restoration. The notification unit 15 notifies the user, the administrator, or the like of the failure of the automatic accuracy restoration (step S110).

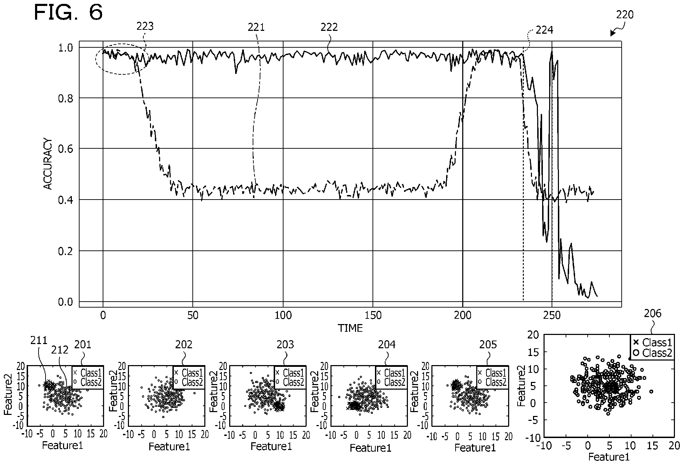

FIG. 6 is a diagram illustrating the change in accuracy of the model adaptation to concept drift. Graph 210 represents the change in accuracy over time. The vertical axis of the graph 220 represents accuracy, and the horizontal axis represents time.

Graphs 201 to 206 below the graph 220 in the drawing are graphs representing the projection results to the training data and operation data feature amount spaces. Graphs 201 to 206 represent the transition of the classes 211 and 212 in the feature amount space along the time course in the graph 210. Since the operation data changes with the passage of time, the class 211 and the class 212 change as illustrated in graphs 201 to 206. A graph 201 represents the class of the feature amount space at the start of operation, and the model is in a state immediately after training is completed. Thereafter, as illustrated in graphs 201 to 206, the classes in the feature amount space may change as the operation time proceeds.

At this time, a curve 221 represents a change in the estimation accuracy of the model in a case where the automatic accuracy restoration is not performed. A curve 222 represents a change in the estimation accuracy of the model in a case where the automatic accuracy restoration is performed. A region 223 is a training start time point, and the estimation accuracy is high even if the automatic accuracy restoration is not performed. Thereafter, when the automatic accuracy restoration is not performed, as indicated by the curve 221, the estimation accuracy of the model is deteriorated in the graphs 202 to 204 due to the change in the operation data. At the time of the graph 205, the estimation accuracy is temporarily recovered because the state of the class has happened to return to a state substantially matching the state of the original class. On the other hand, when the automatic accuracy restoration is performed, as indicated by the curve 222, the adaption to the change in the operation data is successful among the graphs 202 to 205, and the estimation accuracy can be maintained in a high state. Further, in the state of the graph 206, the classification quality is different from that at the time of training because the decision boundary is not linear, and therefore the estimation accuracy is rapidly degraded when automatic accuracy restoration is not performed. In the state of the graph 206, even when automatic accuracy restoration is performed, the adaption to the change in the operation data is not performed well, and the estimation accuracy is degraded.

When such a transition of the estimation accuracy occurs, it is conventionally difficult to measure the estimation accuracy without using the correct label. In contrast, the accuracy evaluation device 1 according to the present embodiment can detect deterioration of the estimation accuracy in the line 224, and can grasp that the tracking of the change in the operation data is not successful.

As described above, the accuracy evaluation device according to the present embodiment extracts the feature amount of the training data and the feature amount of the operation data using the model used for estimation, and classifies the extracted feature amount of the training data and the extracted feature amount of the operation data by the binary classifier. Then, the accuracy evaluation device according to the present embodiment determines when the accuracy of the classification is high, that the adaption to the change in the operation data is not well performed, and thus the automatic accuracy restoration has failed.

Thus, it is possible to determine whether or not the adaption to the change in the operation data is successful without using the correct label of the operation data. When it is determined that the adaption to the change in the operation data is not successful, the accuracy of the model is quickly recovered, and thus it is possible to maintain the estimation accuracy of the machine learning model.

### (Hardware Configuration)

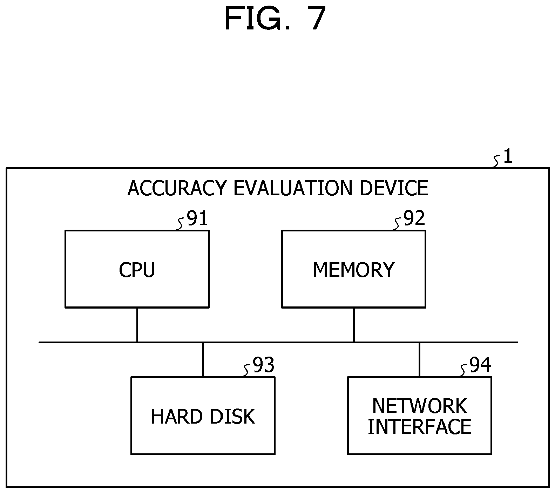

FIG. 7 is a hardware configuration diagram of the accuracy evaluation device. The accuracy evaluation device 1 includes, for example, a central processing unit (CPU) 91, a memory 92, a hard disk 93, and a network interface 94 as illustrated in FIG. 7.

The network interface 94 is an interface for communication between the accuracy evaluation device 1 and an external device. The network interface 94 relays communication between the CPU91 and the machine learning device 2, for example.

The hard disk 93 is an auxiliary storage device. The hard disk 93 stores various programs including a program for realizing the functions of the control unit 10 including the feature amount extraction unit 11, the combined data generation unit 12, the classification unit 13, the determination unit 14, and the notification unit 15 illustrated in FIG. 1.

The memory 92 is a main storage device. As the memory 92, for example, a DRAM (Direct Random Access Memory) or the like may be used.

The CPU91 reads various programs from the hard disk 93, deploys the programs on the memory 92, and executes the programs. Thus, the CPU91 realizes the functions of the control unit 10 including the feature amount extraction unit 11, the combined data generation unit 12, the classification unit 13, the determination unit 14, and the notification unit 15 illustrated in FIG. 1.

### CITATION LIST

### PATENT LITERATURE

[Patent Document 1] International Publication Pamphlet No. WO 2020 / 036192
[Patent Document 2] Japanese Laid-open Patent Publication No. 2017 - 126158
[Patent Document 3] U.S. Patent Application Publication No. 2006 / 0110030

### REFERENCE SIGNS LIST

1 accuracy evaluation device
2 machine learning device
10 control unit
11: feature amount extraction unit
12: combined data generation unit
13 classification unit
14 determination unit
15: notification unit
21 machine learning unit
22: estimation unit
23 automatic restoration unit
31 training data database
32 operation data database

## Claims

1. An evaluation program for causing a computer to execute processing comprising:
generating a second machine learning model, by updating a parameter of a first machine learning model, based on a first feature amount that is obtained from first information using the parameter of the first machine learning model;
generating a third machine learning model, based on a first training data and a second training data, the first training data including: a second feature amount that is obtained from a second data based on a parameter of the second machine learning model; and a correct label indicating first information, the second training data including: a third feature amount that is obtained from a third data based on the parameter of the second machine learning model; and a correct label indicating second information; and
evaluating the second machine learning model, based on the prediction accuracy of the generated third machine learning model.

2. The evaluation program according to claim 1, wherein the updating includes
estimating a machine learning of the first data by clustering based on the first feature amount, and
updating the parameter of the first classification model based on a third training data having the classification as a correct label of the first data.

3. The evaluation program according to claim 1, wherein the third machine learning model is a binary classifier, and
the process further comprises:
obtaining an accuracy indicator, based on the prediction accuracy when the third machine learning model classifies the second feature amount and the third feature amount into a first class corresponding to the first information and a second class corresponding to the second information, respectively; and
evaluating, based on a relationship between the accuracy indicator and threshold, whether the estimation accuracy of the second machine learning model is degraded.

4. The evaluation program according to claim 3, wherein
the accuracy indicator is a receiver operating characteristic (ROC)/area under the curve (AUC) score with respect to the prediction accuracy of the third machine learning model, and
the evaluating includes evaluating that the estimation accuracy of the second machine learning model is degraded.

5. An evaluation method implemented by a computer, the evaluation method comprising:
generating a second machine learning model, by updating a parameter of a first machine learning model, based on a first feature amount that is obtained from first information using the parameter of the first machine learning model;
generating a third machine learning model, based on a first training data and a second training data, the first training data including: a second feature amount that is obtained from a second data based on a parameter of the second machine learning model; and a correct label indicating first information, the second training data including: a third feature amount that is obtained from a third data based on the parameter of the second machine learning model; and a correct label indicating second information; and
evaluating the second machine learning model, based on the prediction accuracy of the generated third machine learning model.

6. An accuracy evaluation device comprising a control unit configured to perform processing including:
generating a second machine learning model, by updating a parameter of a first machine learning model, based on a first feature amount that is obtained from first information using the parameter of the first machine learning model;
generating a third machine learning model, based on a first training data and a second training data, the first training data including: a second feature amount that is obtained from a second data based on a parameter of the second machine learning model; and a correct label indicating first information, the second training data including: a third feature amount that is obtained from a third data based on the parameter of the second machine learning model; and a correct label indicating second information; and
evaluating the second machine learning model, based on the prediction accuracy of the generated third machine learning model.
